# EUROPEAN PATENT APPLICATION

(11) **EP 4 641 434 A1**
(43) Date of publication of application: **29.10.2025**
(21) Application number: 25172959.6
(22) Date of filing: 28.04.2025
(51) Int. Cl.: G06F 40/103, G06F 40/106, G06F 40/114, G06Q 10/04

(54) **AUTOMATED MULTI-PAGE PUBLICATION LAYOUT SYSTEM AND RELATED METHODS**

(30) Priority: 26.04.2024 US 202463639319 P
(71) Applicant: Sophi Inc., Kitchener Ontario N2G 0C5 (CA)
(72) Inventor: O'NEIL, Michael, Caledon (CA); ATELL, Johnathan, Vancouver (CA)
(74) Representative: Reddie & Grose LLP

(57) **Abstract**

The present disclosure provides an automated multi-page publication layout system and related methods. For a given page, one or more content items, a configuration for each of the selected content items, and a canvas layout are selected. A page configuration is generated by populating the selected canvas layout with the selected content items in the selected configuration. A fit score for the page variation is determined based on a set of rules that measure 2D packing efficiency and compliance with a plurality of presentation rules. This process is repeated for each configuration each canvas layout for the selected page. A page configuration having the highest fit score is selected for the selected page. The process is repeated for each page in the layout. A completed publication layout is output to a publisher system for publication, the publisher system publishing the multi-page publication.

## Description

### Related Application Data

The present application claims priority to, and the benefit of, provisional U.S. patent application no. 63/639,319, filed April 26, 2024, the content of which is incorporated herein by reference.

### Technical Field

The present disclosure relates to publication systems, and in particular to an automated multi-page publication layout system and related methods.

### Background

Publication layout is the process of determining the arrangement and content of a publication such as a newspaper and the like. Publication layout is conventionally a manual process that is very time consuming and frequently results in less than optimal results due to complexity, bias and time constraints presented by publication deadlines, which can be daily for many newspapers. The complexity of the publication layout process is due in part to the need to solve several problems at once. These problems include but are not limited to selecting articles for the publication, fitting the selected articles on pages that may have preexisting content of variable type and/or size, arranging text and pictures in a manner that is visually appealing, efficient in terms of the space used, and provides the content in a logical or sensible order and format, and prioritizing locations in the publication that articles or advertisements appear. Publication layout is a complex multi-objective optimization (MOO) problem.

Computerized and automated publication layout solutions have been proposed but have generally been limited to optimizing the layout of individual pages. Moreover, some of the proposed solutions have been computationally complex, requiring large amounts of computing resources and long processing times, which can be problematic due to the time constraints of high frequency publications such as daily newspaper. Approaches to address these shortcomings have typically been to limit the potential variables considering and/or objectives which are sought to be optimized to simplify the solving of the MOO problem. These approaches address computationally complex by providing simpler solutions that are over-constrained, resulting in publication layouts that are less than optimal across many evaluation metrics.

Accordingly, there exists a need for an improved computerized and automated multi-page publication layout system that addresses at least some of the problems with existing approaches.

### Brief Description of the Drawings

FIG. 1 is a schematic diagram of an automated multi-page publication layout system in accordance with one example embodiment of the present disclosure.
FIG. 2 illustrates a simplified block diagram of an example computing device suitable for use in the automated multi-page publication layout system of the present disclosure.
FIG. 3 is a schematic diagram of an example page of a multi-page publication for which the automated multi-page publication layout system of the present disclosure can be used.
FIG. 4 is a flowchart illustrating a method of generating a publication layout of a multi-page publication in accordance with a first example embodiment of the present disclosure.
FIG. 5 is a flowchart illustrating a method of generating a publication layout of a multi-page publication in accordance with a second example embodiment of the present disclosure.
FIG. 6 is a flowchart illustrating a method of generating a publication layout of a multi-page publication in accordance with a third example embodiment of the present disclosure.
FIG. 7 is a flowchart illustrating a method of generating a publication layout of a multi-page publication in accordance with a fourth example embodiment of the present disclosure.

### Summary

The present disclosure provides an automated multi-page publication layout system and related computer-implemented methods. The automated multi-page publication and method apply custom algorithms that, when generating the layout of a multi-page printed publication, determine an optimal content placement for each page of a multi-page publication in accordance with layout parameters and a set of rules. In particular, the method determines an optimal placement of content items (e.g., articles) on each page of the multi-page printed publication.

The placement of the content items in the multi-page printed publication presents a two-dimensional (2D) packing problem which the present disclosure solves as a convex optimization problem. For each content item in the plurality of content items, an optimal placement is determined using a recursive greedy algorithm that defines a solution for solving the 2D packing problem of content item placement. The recursive greedy algorithm is used for each content item in the plurality of content items, as described below and herein. Guide conditions are defined to avoid iterating over all possible solutions. The possible configurations for content items and page layouts are filtered so that the only options that will result in valid content placements are considered.

An automated method of generating a publication layout of a multi-page publication in accordance with the present disclosure is as follows. An input package is received from a publisher via a publisher system. The input package is used to generate a partial (or incomplete) page layout of the multi-page publication. The input package comprises content items, ads and page furniture, and comprises data and information for completing the layout of the multi-page publication including text, images and headers, etc. A set of articles comprising articles of "minimum valid size" is determined based on content type, priority, elements, and other factors. Next, sections and/or pages are processed to organize each page into reserved (e.g., pre-allocated) space for ads, content items or page furniture, and empty canvas ("free space") surrounding the reserved space. The canvas is the area of each page to be populated by content items. A processing order is determined based on page complexity. This may involve sorting the pages of each section based on page complexity. Pages having a special presentation area (e.g., spreads) are more complex and are processed first. After pages having a special presentation have been processed, pages are processed in descending order of the amount of reserved space (with pages having more reserved space being processed first). Each page may have several valid canvas layouts (also known as canvas configurations), and each canvas layout may have many valid container layouts. This results in many valid versions of the same page. Each version of a page (canvas layout and article layout within a given canvas layout) is processed in parallel by selecting all valid articles from the set of articles for each container. After all versions of a page are populated with the content items that provide the best score, each page configuration is scored for a total fit score. The page configuration with the highest total fit score is chosen, the articles associated with that page configuration are removed from the set of articles for use, the next page in the processing order is processed. This is repeated for each page until there are not more content items or pages to process. The completed layout of the multi-page publication is returned to the publisher client via publisher system.

The automated multi-page publication layout system and related computer-implemented methods of the present disclosure generate and output a completed publication layout document that can be printed via a local printer connected to the layout system or sent to a publisher system for printing. The completed publication layout document provides an improved publication layout compared with prior art solutions across several evaluation metrics. Content item configurations/shapes, canvas layouts, pages and sections of the publication are defined and parameterized to simplify and improve the optimization of the publication layout by using a series of fit scores at a different levels of the publication layout (i.e., content item configuration/shape, canvas layout, page and optionally section and/or overall publication processing levels) to optimize the selection, placement and appearance of content items in the publication in terms of 2D packing efficiency and compliance with a number of presentation rules for the publication, which may be set by the publisher. For each instance of the automated multi-page publication layout system and related computer-implemented methods of the present disclosure, the fit scores can be configured to provide a desired balance between the optimization of the publication layout and the computationally complexity of the optimization process and the computing resources and processing time associated with it. This has the technical effect of providing a computationally efficient computerized publication layout (optimization) process tailored to the available computing resources and processing time to generate the completed publication layout. This has the further technical effect of allowing the computationally complexity of the computerized publication layout (optimization) process to be reduced for a given instance as desired, thereby reducing the amount of computing resources and processing time to generate the completed publication layout while generating an improved or more optimized publication layout.

In accordance with a first aspect of the present disclosure, there is provided a computer-implemented method of generating a publication layout of a multi-page publication automatically, without user intervention, the publication layout being defined by a publication layout computer-readable electronic document, each page of the publication comprising a content area. In accordance with a first embodiment of the first aspect, the method comprises the steps of: (a) selecting a page having free space in the content area from a set of pages of the publication layout, the selecting based on a processing order; (b) selecting one or more content items from a set of content items; (c) selecting a canvas layout from a plurality of canvas layouts; (d) selecting a configuration for each of the selected content items from a plurality of valid configurations for each of the selected content items; (e) populating the selected canvas layout with the selected content items in the selected configurations for each of the selected content items to generate a populated canvas; (f) determining a canvas fit score for the populated canvas, the canvas fit score being based on a measure of a two-dimensional (2D) packing efficiency of the populated canvas and a measure of an amount by which the populated canvas complies with a plurality of presentation rules; (g) selecting a canvas configuration having the highest canvas fit score; (h) populating the selected page with the selected canvas configuration to generate a populated page; (i) determining a page fit score for the populated page, the page fit score being based on a measure of the 2D packing efficiency of the populated page and a measure of an amount by which the populated page complies with a plurality of presentation rules; (j) in response to the page fit score meeting or exceeding a threshold, generating an updated publication layout computer-readable electronic document based on the populated page; (k) repeating steps (a) to (j) for each page having free space in the set of pages of the publication layout until no pages having free space remain in the set of pages of the publication layout, and then outputting a completed publication layout computer-readable electronic document; and printing, via a printer, the completed publication layout computer-readable electronic document; or sending the completed publication layout computer-readable electronic document to a publisher system for printing via a printer, the sending causing the publisher system to print the completed publication layout computer-readable electronic document via the printer.

In some or all examples of the first embodiment, the method further comprises the step of: before determining the canvas fit score in step (f), performing post-processing on the populated canvas, the post-processing comprising adjusting a content and/or white space of the canvas so that the contents of the canvas fit within the canvas in accordance with predetermined presentation rules for white space.

In some or all examples of the first embodiment, the method further comprises the step of: before determining the page fit score in step (i), performing post-processing on the populated page, the post-processing comprising adjusting a content and/or white space of the page so that the contents of the page fit within a printable area of the page in accordance with predetermined presentation rules for white space.

In some or all examples of the first embodiment, the method further comprises the step of: before selecting a configuration for each of the selected content items in step (d), removing any invalid configurations for each content item in the set of content items, and determining a shape fit score for each invalid configurations for each content item in the set of content items.

In some or all examples of the first embodiment, the canvas fit score is also based on the shape fit score.

In some or all examples of the first embodiment, each page in the publication layout having free space has a predetermined feature eligibility, wherein feature eligibility of a page indicates all feature types that are valid for the page, each feature type representing a special presentation format for a content item, the method further comprising the step of: before selecting the canvas layout in step (c), generating the plurality of canvas layouts for each page in the publication layout having free space based on a set of presentation rules and the predetermined feature eligibility for each page in the publication layout.

In some or all examples of the first embodiment, the feature types include: (i) folios ("double trucks" or "spreads") in which a content item is presented on two full facing (adjacent) pages of the publication; (ii) jumps ("turns") in which a content item is presented on pages of two or more non-adjacent pages of the publication or portions thereof, (iii) loft items in which a content item is located at a top of a content area of a page of the publication; (vi) cellar items in which a content time is located at the bottom of the content area of a page; (v) briefs/stick content items in which a content item is limited to one column of a page of the publication; and (vii) galleries in which the content item is a collection of images.

In some or all examples of the first embodiment, each page in the publication layout having free space has a predetermined feature eligibility, wherein feature eligibility of a page indicates all feature types that are valid for the page, each feature type representing a special presentation format for a content item, the method further comprising the step of: determining the processing order for the pages based on a complexity of each page, wherein the complexity of each page is based on the predetermined feature eligibility of the page.

In some or all examples of the first embodiment, each content item in the set of content items has a predetermined feature eligibility, wherein feature eligibility of a content item indicates all feature types that are valid for the content item, each feature type representing a special presentation format for the content item.

In some or all examples of the first embodiment, the method further comprises the step of: in response to the page fit score meeting or exceeding a threshold, removing the selected content items in the populated page from the set of content items.

In some or all examples of the first embodiment, in step (b) the one or more content items are selected in descending order of priority such that content items having a higher priority are selected before content items having a lower priority.

In some or all examples of the first embodiment, the content items are selected based on one or both of a priority and/or content type.

In some or all examples of the first embodiment, the content items are selected based on priority and content, wherein the pages of the multi-page publication are organized into a plurality of sections, wherein each content item and each section of the multi-page publication is associated with one or more logical categories, and wherein selecting the content items based on content comprises selecting content items based on the logical categories associated with the content items and the logical sections of the selected page.

In some or all examples of the first embodiment, the set of pages of the publication layout is a section of the multi-page publication, the method further comprising the steps of: before selecting the page in the publication layout having free space in step (a): selecting the section of the multi-page publication based on a processing order; and after step (k): (l) determining a section fit score for the section, the section fit score being based on a measure of the 2D packing efficiency of the populated section and a measure of an amount by which the populated section complies with a plurality of presentation rules; and (m) in response to the section fit score meeting or exceeding a threshold, generating an updated publication layout computer-readable electronic document based on the populated section; and (n) repeating steps (a) to (m) for each section in the publication layout having free space until no sections in the publication layout having free space remain, and then outputting the completed publication layout computer-readable electronic document.

In some or all examples of the first embodiment, the set of pages of the publication layout is all of the pages of the multi-page publication, the method further comprising the steps of: after step (k): (l) determining an overall layout fit score for the multi-page publication, the section fit score being based on a measure of the 2D packing efficiency of the populated multi-page publication and a measure of an amount by which the populated multi-page publication complies with a plurality of presentation rules; and (m) in response to the overall layout fit score meeting or exceeding a threshold, generating an updated publication layout computer-readable electronic document based on the populated overall layout; and (n) in response to the overall layout fit score not meeting or exceeding the threshold, repeating steps (a) to (m) with different selections until the overall layout fit score is determined to meet or exceed the threshold.

In some or all examples of the first embodiment, the content area of each page of the publication consists of one or both of reserved space and non-reserved space, any free space in a page being located in the non-reserved space.

In some or all examples of the first embodiment, the reserved is being allocated to advertisements.

In some or all examples of the first embodiment, the reserved space is pre-populated with the advertisements.

In some or all examples of the first embodiment, the non-reserved space of each page defines the canvas area.

In some or all examples of the first embodiment, the canvas area of a page may be continuous or non-continuous.

In some or all examples of the first embodiment, non-continuous canvas areas may be contiguous (i.e., touching or adjacent) or non-contiguous (i.e., non-touching or adjacent).

In some or all examples of the first embodiment, each content item comprises a title ("headline") and a body, each body comprises one or more content elements, each content element being one of text, image or graphic.

In some or all examples of the first embodiment, each content element is any one of a text portion, a fact box, a byline, a pull quote (an enlarged quote "pulled" from the body of the content item), a kicker (a graphic located above or below a headline), a preamble/deck, an image, a graphic or a caption.

In some or all examples of the first embodiment, each content item in the set of content items having a content type, the content type being one of article(s), editorial(s), tabular sports result(s), weather forecast(s), obituary(ies), recipe(s), post(s), classified advertisement(s), image gallery(ies), index(ices), teaser(s), cartoon(s), and financial analysis(es)/report(s).

In some or all examples of the first embodiment, the publication is a newspaper.

In some or all examples of the first embodiment, each page of the publication is defined by a plurality of columns.

In some or all examples of the first embodiment, the content area of each page of the publication is defined by a plurality of columns.

In some or all examples of the first embodiment, the completed publication layout computer-readable electronic document comprises one or more JavaScript Object Notation (JSON) files.

In some or all examples of the first embodiment, the method further comprises the step of: generating an encoded visualization of the multi-page publication in accordance with the completed publication layout computer-readable electronic document, wherein the encoded visualization is in Scalable Vector Graphics (SVG) or Portable Network Graphic (PNG) format, wherein the encoded visualization illustrates the content allocated to each page of the multi-page publication by content type, with each color representing a different content type or sub-type

In accordance with a second embodiment of the first aspect, the method comprising the steps of: (a) selecting a page in the layout having free space based on the processing order; (b) selecting one or more content items from a set of content items; (c) selecting a canvas layout from the plurality of canvas layouts; (d) selecting a configuration for each of the selected content items for the selected page from a plurality of configurations for the selected content items; (e) generating a page configuration by populating the selected canvas layout with the selected content items in the selected configuration; (f) determining a fit score for the page variation based on a set of rules that (1) measure a two-dimensional (2D) packing efficiency, and (2) measure compliance with a plurality of presentation rules for publications; (g) repeating steps (b) to (f) for each configuration and each canvas layout for the selected page; (h) selecting page configuration having the highest fit score for the selected page; (i) generating an updated layout based on the select page configuration for the selected page; (j) repeating steps (a) to (i) for each page in the layout having free space based on a processing order; and (k) outputting a completed publication layout to a publisher system for publication, the publisher system publishing the multi-page publication.

In some or all examples of the second embodiment, the method further comprises: generating a plurality of canvas layouts for each page in the layout having free space.

In some or all examples of the second embodiment, the method further comprises: determining the processing order for the pages based on a complexity of each page.

In some or all examples of the second embodiment, the method further comprises: removing the selected content items from the set of content items.

In some or all examples of the second embodiment, the content items are selected based on priority and/or content.

In some or all examples of the second embodiment, the content items are selected from a subset of content items in the set of content items.

In some or all examples of the second embodiment, the set of rules which determine how the fit score is determined are based on a combination of two-dimensional packing efficiency and presentation rules.

In some or all examples of the second embodiment, the presentation rules comprise one or both of hard business rules require or prohibit a type of placement or soft business rules that influence the fit score.

In some or all examples of the second embodiment, the soft presentation rules consider one or a combination of the following factors: a percentage (%) of a page comprised by the content item; a percentage (%) of a page comprised by images; a number of similar content elements on the same page; a preference for large or small images; a preference for sequential pages that appear more alike or sequential pages that look more different; a number of content elements of each content item that is used; a proximity to the top of the page; a proximity to the front of the publication; a priority, priority type or priority rating of the content item; a height:width ratio of the content item; an amount of remaining free space on the page; a presence of a quote box that spans a full column from headline to page bottom; and a typographic line count of the content element or content item.

In some or all examples of the second embodiment, the content items are selected based on priority and content, wherein the pages of the multi-page publication are organized into a plurality of logical sections, wherein each content item and each logical section of the multi-page publication is associated with one or more logical categories, and wherein selecting the content items based on content comprises selecting content items based on the logical categories associated with the content items and the logical sections of the selected page.

In some or all examples of the second embodiment, the content item is selected in descending order of a priority rating such that content items having a higher priority rating are selected before content items having a lower priority rating.

In some or all examples of the second embodiment, the publishing system comprises a printer and publishing the multi-page publication comprises printing the multi-page publication via the printer.

In some or all examples of the second embodiment, the publication is a newspaper.

In accordance with another aspect of the present disclosure, there is provided a layout system comprising a computing device. The computing device comprises one or more processors and one or more memories coupled to the one or more processors. The one or more memories have tangibly stored thereon executable instructions that, in response to execution by the one or more processors, cause the computing device to perform the methods described above and herein. The computing device may be a server.

In accordance with a further aspect of the present disclosure, there is provided one or more non-transitory machine-readable mediums having tangibly stored thereon executable instructions for execution by one or more processors. The executable instructions, in response to execution by the one or more processors, cause the one or more processors to perform the methods described above and herein.

Other aspects and features of the present disclosure will become apparent to those of ordinary skill in the art upon review of the following description of specific implementations of the application in conjunction with the accompanying figures.

### Detailed Description of Embodiments

The present disclosure is made with reference to the accompanying drawings, in which embodiments are shown. However, many different embodiments may be used, and thus the description should not be construed as limited to the embodiments set forth herein. Rather, these embodiments are provided so that this application will be thorough and complete. Wherever possible, the same reference numbers are used in the drawings and the following description to refer to the same elements, and prime notation is used to indicate similar elements, operations or steps in alternative embodiments. Separate boxes or illustrated separation of functional elements of illustrated systems and devices does not necessarily require physical separation of such functions, as communication between such elements may occur by way of messaging, function calls, shared memory space, and so on, without any such physical separation. As such, functions need not be implemented in physically or logically separated platforms, although such functions are illustrated separately for ease of explanation herein. Different devices may have different designs, such that although some devices implement some functions in fixed function hardware, other devices may implement such functions in a programmable processor with code obtained from a machine-readable medium. Lastly, elements referred to in the singular may be plural and vice versa, except where indicated otherwise.

The present application concerns publications such as newspapers, and therefore refers to terms used in the publication industry. The present disclosure may define certain terms for the purpose of explanation. The inclusion of a definition for any term within the present disclosure is not intended to be limiting except where indicated otherwise. Within the present disclosure, the terms "content item" and "article" may be used interchangeably.

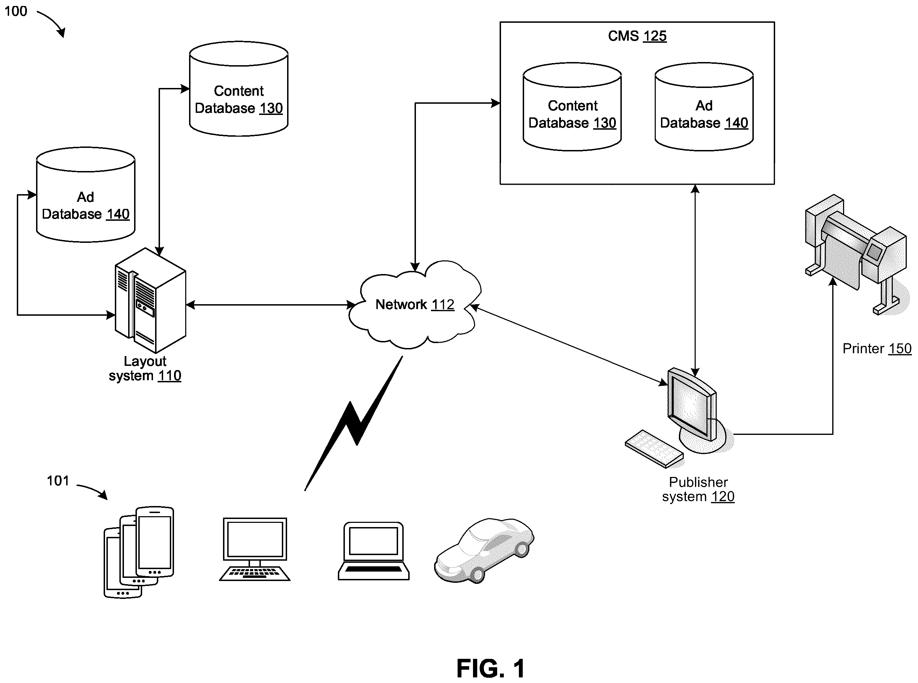

Reference is first made to FIG. 1 which shows in schematic block diagram form an automated multi-page publication layout system 100 in accordance with one example embodiment of the present disclosure. The automated multi-page publication layout system (hereinafter "system") 100 comprises a layout system 110 and a publisher system 120 that communicate with each other via a communication network 112 such as the Internet. The layout system 110 and publisher system 120 are typically operated by different entities. For example, the publisher system 120 may be operated by a publisher such as a newspaper whereas the layout system 110 may be operated by a service provider distinct and different from the publisher. The layout system 110 and publisher system 120 each comprise one or more servers which perform at least some of the steps of the methods described herein. The layout system 110 and publisher system 120 may each be a single computing device (or system) comprising a plurality of functional components (or modules). Alternatively, the layout system 110 and publisher system 120 may each comprise multiple functional components distributed among a plurality of computing devices (or systems), which may be collocated or geographical distributed/remote from each other. The functional components may be in the form of machine executable instructions embodied in a machine-readable medium. The teachings of the present disclosure are flexible and capable of being operated in various different environments without compromising any major functionality.

The layout system 110 is used to layout (or arrange) a multi-page publication. This comprises determining content to be included in the multi-page publication and allocating the content to an electronic multi-page publication layout document for use by the publisher system 120 to print the multi-page publication. The publisher system 120 receives the multi-page publication from the layout system 110 and prints the multi-page publication via a printer 150. Alternatively, in other embodiments the multi-page publication may be printed by the layout system 110 via a printer 150 connected thereto.

The publisher system 120 is coupled to, or comprises, a content management system (CMS) 125 that comprises a content database 130 and advertisement ("ad") database 140. The publisher system 120 may access the layout system 110 directly and/or indirectly. The CMS 125 includes a CMS application for managing and processing content from the databases 130, 140, and generating layouts for a multi-page publication. Alternatively, the content database 130 and ad database 140, or a copy thereof, may be maintained by the layout system 110 rather than the publisher system 120.

The ad database 140 comprises a plurality of advertisements. The ads may comprise text, images, graphics or a combination thereof.

The content database 130 comprises a plurality of content items (such as articles). The content database 130 may comprise a content list enumerating the content items. The content items may comprise text, images, graphics or a combination thereof. Each content item in the plurality of content items has the following minimum features: a title (sometimes known as a headline) and a body. The body comprises one or more content elements (sometimes known as body parts). Each content element being one of text, image or graphic. The content elements may be article text, fact boxes, bylines, pull quotes (an enlarged quote "pulled" from the body of the content item), kicker (a kicker is a graphic that goes above or below a headline), preamble/deck, images, graphics, captions, or other. Content items are passed from the CMS 125 to the layout system 110 as discrete objects. The content items in the content list may be sorted in an order of priority.

Each content item has a predetermined content type selected from a plurality of determined content types. The predetermined content types may include any combination of articles (e.g., newspaper articles, scholarly articles, or the like), editorials, tabular sports results, weather forecast, obituaries, recipes, posts, classifieds, image galleries, indices, teasers, cartoons, and financial analysis/reports.

Each content item in the content database 130 has an assigned priority and optionally an assigned priority type (e.g., filler or non-filler) and/or an assigned priority rating (a priority rating may be a qualitative rating such as low, medium or high). As noted above, the content items in the content list may be sorted in an order of priority, in which case the order of the content items in the content list defines an inherent or implicit priority ranking. The priority, priority type and/or priority rating may be based on a predicted performance indicator or predicted enterprise value. The performance indicator may be based on a user performance indicator representing a predicted amount of user interactions with the article adjusted for promotion of the article and a subscriber performance indicator representing an amount of subscribers acquired or retained based on user interaction with the article. The performance indicator may be a numerical value. An example of a suitable performance indicator is described in U.S. Patent No. 11,328,026, issued May 10, 2022, the content of which is incorporated herein by reference.

Each content item in the content database 130 may be assigned to one or more logical categories or types based on a subject-matter or topic of the content item. The logical categories or types may be associated with a section of the publication when the publication is organized into sections in accordance with a subject-matter or topic of the section. In some embodiments, the content item may be required to fit within a single section of the publication. In other embodiments, the content item may be allocated across more than one section of the publication.

Each content item in the content database 130 also has a predetermined feature eligibility. Feature eligibility indicates whether a content item may have a special presentation, such as a presentation spanning more than one page. Examples of the feature types include: (i) folios (also known as double trucks or spreads) in which two full facing (adjacent) pages of the publication are used for a single content item; (ii) jumps (also known as turns) in which portions or full pages of two or more non-adjacent pages of the publication are used for a single content item; (iii) loft articles (articles which must be located at the top of a page); (vi) cellar articles (articles which must be located at the bottom of a page; (v) briefs/stick articles (articles which are limited to one column); and (vii) galleries (collections of images). Feature eligibility is used by the automated methods of generating a publication layout of a multi-page publication described in the present disclosure.

Each content item has multiple possible configurations, and each page having free space has multiple possible canvas layouts. A content item configuration (e.g., article configuration) defines the shape and content of a content item. One or both of the shape and content of a content item may vary between configurations. For example, the number and/or size of images as well as the overall shape and size of a content item may vary between configurations. A canvas layout of a respective page organizes the canvas area of the respective page into reserved space and free space with the free space being organized into one or more article containers. Each article container is located within one or more columns on the respective page. One or both of the number and size of article containers may vary between page layouts. For example, a particular canvas area may be organized into one article container spanning 5 column or 2 article containers, one article container spanning 2 columns and another container article spanning 3 columns.

In at least some examples, content item configurations are generated based on a set of presentation rules and a predetermined feature eligibility for each content item in the set of content items. Similarly, in at least some embodiments canvas layouts are generated based on a set of presentation rules and a predetermined feature eligibility for each page in the publication layout. The predetermined feature eligibility for a page is based at least in part on an amount of free space (e.g., number and size of article containers) on the page. The pages of a publication may be designated as being eligible to include certain feature types (e.g., folios or jumps) and certain content items may be designated or determined as being eligible to be presented as certain feature types based on publisher's preferences. Feature eligibility may be based on any of the metadata available, depending on the publisher's preferences. Alternatively, feature eligibility may be determined by the layout system 110 based on one or more parameters such as, for example, story size and number of images.

Information about each content item, including one or any combination of a content type, priority, priority type, priority rating, logical category, and feature candidacy form metadata about each content item which is stored in a searchable and accessible format for use by the layout system 110, as described below. The content item metadata may be stored in the content database 130 along with the content items.

Each content item is also associated with formatting rules based on its respective content type, and when the publication is organized into sections, the section in which it is located. Using the formatting rules, a plurality of possible configurations for each content item in the plurality of content items is determined based on optional elements of the respective content item being included and excluded, and when the publication is organized into sections, each possible section in which it may be located based on the one or more logical categories or types assigned to the respective content item. As noted above, the formatting rules for determining the possible configurations for a content item may vary based on the content type (e.g., article vs. other) and when the publication is organized into sections, the section in which it is located. The formatting rules may set one or more of a maximum size of the configurations, a minimum size of the configurations (e.g., articles cannot be smaller than 3 columns), a height restriction (e.g., number of lines), a column restriction (e.g., max/min number of columns), and an aspect ratio restriction. The formatting rules can be applied to articles as a whole and/or to elements. or other configuration restrictions.

The possible configurations for each content item are determined automatically without user intervention. The possible configurations for each content item represent a version of the content item, which is defined by selfcontained code defining the properties of the article, typically in JavaScript Object Notation (JSON). The possible configurations for each content item are predetermined after a partial layout has been received from the publisher but before any layout operations. Alternatively, the possible configurations for each content item be determined dynamically in real-time while generating the complete layout. In some embodiments, the possible configurations for each content item are determined by one or more configuration generator functions (or subroutine or algorithms) using formatting rules based on its respective content type and optionally the logical category and/or section in which it is to be placed. In some embodiments, a distinct and separate configuration generator function is used for each article design (e.g., one large image, multiple images, etc.). The possible configurations of the content items are each defined by a set of one or more rectangles. Conversely, the canvas of each page in the publication defines a number rectangular containers for receiving a content item or parts of a content item. The possible configurations are stored in the content database 130 along with the content items, possibly as part of the content item metadata. The possible configurations are defined by content-based templates, which are dependent on the elements of the respective content item.

The elements of the respective content item determine which of one or more content-based templates the content item is eligible for. The possible configurations are then generated based on the one or more content-based templates the content item is eligible for.

When a content item is eligible for a folio, the corresponding configuration spans more than one page. When a content item is eligible for a jump, multiple configurations are defined for the content item. Each configuration for the jump item is placed on a different page. Each configuration for the jump item may be the same or different. Each configuration of the jump item is placed like a new content item, and is placed in series until all configurations of the jump item are allocated.

The system 100 may optionally comprise a plurality of client devices (or user devices) 101 that communicate with the publisher system 120 via the communication network 112 when the system 100 is used to generate an online or digital multi-page publication. The user devices 101 may be mobile wireless communication devices, examples of which include, but are not limited to, handheld wireless communication devices such as smartphones, tablets, laptop or notebook computers, netbook or ultrabook computers, vehicles having an embedded-wireless data management system such as a Wi-Fi^{™} or cellular equipped in-dash infotainment system or tethered to another wireless communication device having such capabilities.

The publisher system 120 comprises or is coupled to a printer 150 for printing a printed multi-page publication. The publisher system 120 may be used to publish a print or online (digital) publication such as a journal, newspaper, magazine, book, or the like. In one example, the publisher system 120 is operated by a publisher such as a newspaper publisher and the layout system 110 is operated by a third-party data service provider distinct from the publisher operating the publisher system 120.

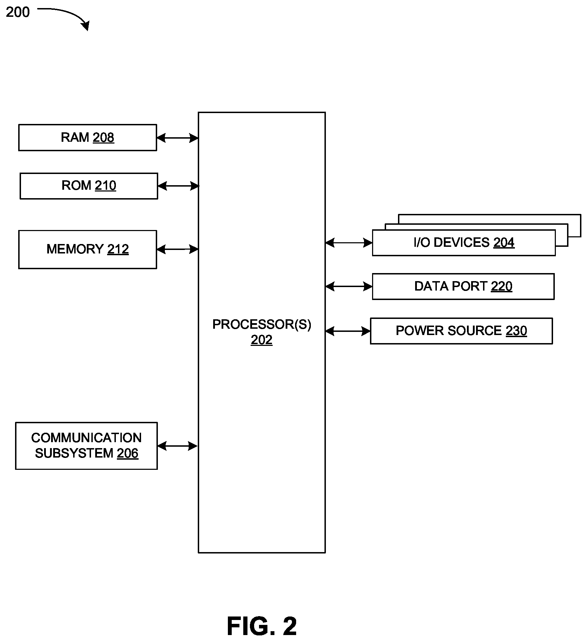

FIG. 2 illustrates a simplified block diagram of an example computing device 200 suitable for use in the automated multi-page publication layout system of the present disclosure. The computing device 200 may be used to implement a server of the layout system 110, a server of the publisher system 120 or a user device 101. The computing device 200 includes one or more processor(s) 202, such as a central processing unit (CPU) with a hardware accelerator, a graphics processing unit (GPU), a tensor processing unit (TPU), a neural processing unit (NPU), a microprocessor, an application-specific integrated circuit (ASIC), a fieldprogrammable gate array (FPGA), a dedicated logic circuitry, a dedicated artificial intelligence processor unit, or combinations thereof. The processor(s) 202 control the overall operation of the computing device 200.

The computing device 200 may also include one or more input/output (I/O) device(s) 204 depending on the nature of the computing device 200. Example input devices include a keyboard, a keypad, a touchpad, a mouse, a microphone, sensors, buttons, switches, a camera, and/or a touchscreen. Example output devices include a display, a speaker, a notification light (e.g., LED) and/or a haptic feedback device (e.g., vibrator). In the shown example, the I/O device(s) 204 are shown as a component of the computing device 200. In other examples, the I/O device(s) 204 may be optional and external to the computing device 200. In other examples, the I/O device(s) 204 may be omitted. The computing device 200 may provide a visual user interface (VUI) rendered and displayed on an output device such as a touch or non-touch display. A user may interact with the VUI using an input device to access and display relevant information. The computing device 200 may also comprise a data port 220 such as a serial data port (e.g., Universal Serial Bus (USB) data port).

The computing device 200 includes a communication subsystem 206 that includes one or more network interfaces for wired and/or wireless communication with a communications network (e.g., an intranet, the Internet, a P2P network, a WAN and/or a LAN) or other computing device 200 or node. The network interfaces may include wired links (e.g., Ethernet cable) and/or wireless links (e.g., one or more antennas) for intra-network and/or inter-network communications. The wireless links exchange radio frequency signals with a wireless network that is part of the communication network 112.

The computing device 200 includes random access memory (RAM) 208, read-only memory (ROM) 210, and non-transitory memory 212 comprising one or more storage units, which may include a mass storage unit such as a solid state drive, a flash memory, a hard disk drive, a magnetic disk drive and/or an optical disk drive. The memory 212 may store instructions for execution by the processor(s) 202 such as instructions to carry out methods described in the present disclosure. The memory 212 may include other software instructions, such as for implementing an operating system and other applications/functions. The memory 212 also stores a variety of data. System software, software modules, specific device applications, or parts thereof, may be temporarily loaded into a volatile store, such as RAM 208, which is used for storing runtime data variables and other types of data or information. Communication signals received by the computing device 200 may also be stored in RAM 208. Although specific functions are described for various types of memory, this is merely one example, and a different assignment of functions to types of memory may be used in other embodiments.

In other examples, one or more data sets and/or modules may be provided by an external memory (e.g., an external drive in wired and/or wireless communication with the computing device 200) or may be provided by a transitory or non-transitory machine-readable medium. Examples of non-transitory machine-readable media include a RAM, a ROM, an erasable programmable ROM (EPROM), an electrically erasable programmable ROM (EEPROM), a flash memory, a CD-ROM, or other portable memory storage.

The computing device 200 also comprises a power source 230, which may include a rechargeable battery that may be charged, for example, through charging circuitry coupled to a battery interface such as a power and/or data port 220.

The computing device 200 also comprises a bus (not shown) providing communication among components of the computing device 200, including the processor(s) 202, I/O device(s) 204, communication subsystem 206, RAM 208, ROM 210, and memory 212. The bus may be any suitable bus architecture including, for example, a memory bus, a peripheral bus or a video bus.

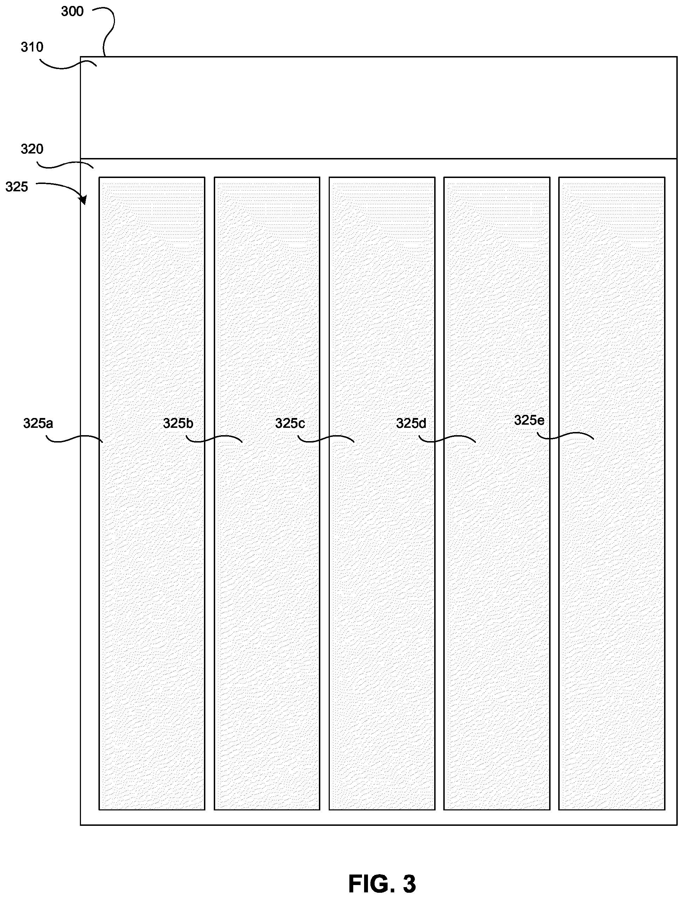

FIG. 3 illustrates an example of a page 300 of the multi-page publication. Each page has a defined layout which is specified in the partial layout received from the publisher. Each consists of one or a combination of content items, ads and page furniture. Page furniture is all content on a page other than content items and ads, and may comprise headers and/or footers. The page furniture may comprise one or a combination of text, images and graphics. The page of the publication consists of a printable area and a non-printable area. The printable area of the page 300 comprises a header 310 and a content area 320. The non-printable area is restricted space or unallocatable space, such as a margin area of the page 300. The header may be omitted in other examples of a page. In other examples, a page may comprise a footer (not shown) instead or, or in addition to, a header. The presence of the header or footer, the size of the header/footer, the format of the header/footer and the content of the header/footer may vary between pages depending on one or any combination of a publication type of the multi-page publication or a page type. Similarly, the size and content of the content area 320 may vary between pages depending on one or any combination of a publication type of the multi-page publication or a page type.

The publication type may be a newsletter, tabloid newspaper, broadsheet newspaper, or magazine. The page type may be based on a location of the page within the publication and/or a content of the page. With respect to the location of the page within the publication, the page type may include a cover page of the publication (i.e., first page of the publication), a cover page of a section of the publication (i.e., first page of a section of the publication), a subsequent page in the publication following the first page or cover page of a section of the publication. With respect to the content of the page, the page type may include a content page (e.g., no advertisements), an advertisement page (e.g., a full page advertisement), or a mixed content page with one or more content items and one or more advertisements. For example, the cover page may include a larger header that includes a publication title and date, whereas a section cover page may include a smaller and/or different shaped header with a section title, date and page number, whereas a subsequent page in the publication which is not a cover page may include an even smaller header with only a date and page number.

The content area 320 is defined by a plurality of rectangular, vertically extending columns (or rectangular bins) denoted collectively by the reference 325. It will be appreciated that the columns (or rectangular bins) are oriented vertically with respect to a reading/viewing orientation of the page 300 (also known as a page orientation), extending between a top and bottom of the page. In the shown example, the content area 320 is organized into 5 columns (or rectangular bins) denoted by references 325a, 325b, 325c, 325d and 325e. The number of columns may vary based on the publication. In some embodiments, the number of columns is fixed per page is fixed within the publication. In other embodiments, the number of columns per page may vary within the publication. Typically, the number of columns is between 4 and 6. A separation space knowns as a gutter is located between each of the columns. As noted above, the possible configurations of the content items are defined by a set of one or more rectangles which can be allocated to rectangle containers defined in the canvas of a page in the publication, thereby enabling fitting/packing. The content area 320 is used to locate content in the form of one or more content items and/or one or more ads. Content items or ads may occupy a whole or a part of one or more columns.

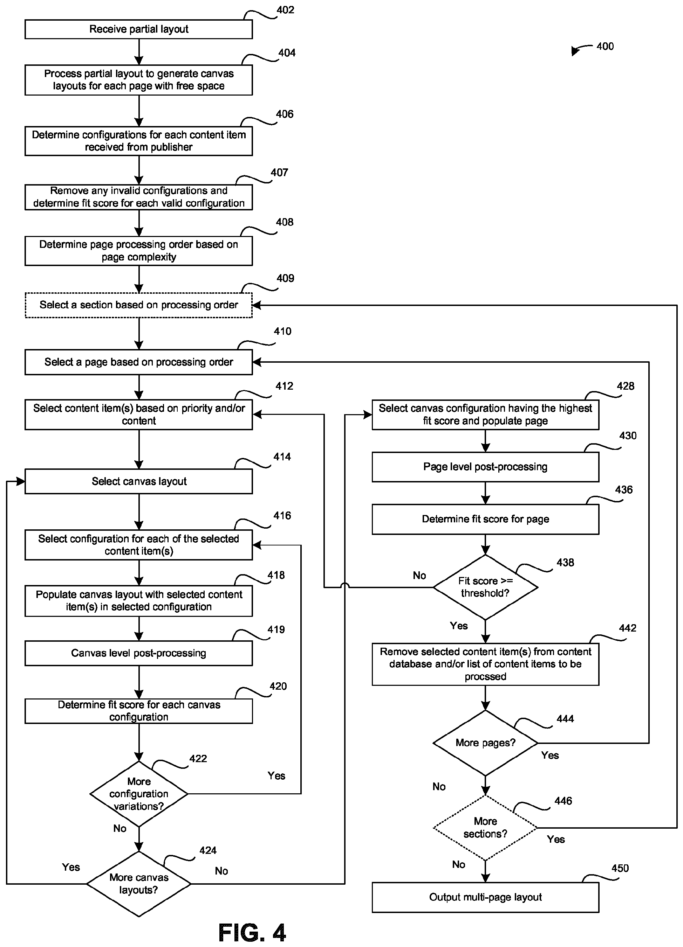

When a page layout is received from the publisher, the content area 320 for the page may include reserved space (area) and non-reserved space (area), the non-reserved space defining empty space ("free space") of the content area 320 of a page, referred to as the "canvas area". The canvas area of the page may be continuous or non-continuous. Non-continuous canvas areas may be contiguous (i.e., touching or adjacent) or non-contiguous (i.e., non-touching or adjacent). The layout system 110 allocates content items to the canvas area of each page in the multi-page publication using an automated method, such as the method 400 (FIG. 4) described below.

The reserved area may be pre-allocated with one or more of content items (e.g., articles), ads and page furniture. In some embodiments, content items are pre-allocated. In some embodiments, all ads which are to appear in the multi-page publication are pre-allocated. The pre-allocation of ads simplifies the layout processing considerably while providing advertisers with more input as to the location at which their ads are located within the multi-page publication. Alternatively, the layout system 110 may be used to select and/or allocate at least some of the ads within the multi-page publication in addition to content items. This may be procedurally more complex from a processing perspective but result in a more efficiently packed multi-page publication, which may be advantageous to readers and other stakeholders.

Referring next to FIG. 4, an automated method 400 of generating a publication layout of a multi-page publication in accordance with a first example embodiment of the present disclosure will be described. The method 400 is performed automatically by one or more processors of a layout system 110 without user intervention. The layout system 110 and method 400 apply custom algorithms that, when generating the layout of a multi-page printed publication, determine an optimal content placement for each page of a multi-page publication in accordance with layout parameters and a set of presentation rules. In particular, the method determines an optimal placement of content items (e.g., articles) on each page of the multi-page printed publication.

For a given page having free space, there are many different article combinations possible (possibly hundreds or thousands of possibilities or more, depending on the publication), with many different article configurations possible for each article (again, possibly hundreds or thousands of possibilities or more, depending on the publication), with many different canvas layouts possible (again, possibly hundreds or thousands of possibilities or more, depending on the publication). Thus, the processing of generating the layout of the multi-page publication is a complex multi-objective optimization problem that includes a two-dimensional (2D) packing problem. To address this problem, example embodiments of the present disclosure determine an optimal placement using a recursive greedy algorithm for each content item in a plurality of content items to be considered.

The layout system 110 may retrieve and use only the metadata about content items from the content database 130 and/or ads from the ad database 140 and does not retrieve or otherwise use the actual content items or ads directly. The metadata is typical provided by JSON format.

At step 402, a partial (or incomplete) page layout (also known as a page plan) of the multi-page publication (e.g., newspaper) is received by the layout system 110 from the publisher system 120 operated by the publisher of the respective multi-page publication. In some embodiments, the partial layout may be defined by one or more JSON files. In one example, content items are defined by one JSON file, ads are defined by another JSON file, images used in content items are defined by another JSON file, and headers and other information about the multi-page publication are defined by another JSON file. In other embodiments, a single JSON file may be used to define the entire multi-page publication.

The JSON files identify content items by a content item identifier (ID), a size of the identified content items, and coordinates of location of content items on a respective. The JSON files may be generated by the CMS application of the CMS 125. The JSON files store objects in a structure of the JSON format. After an input package with the JSON content objects is received, it is processed in Python and instructions in JSON are returned. The JSON files define bounding blocks for every element of every content item of a respective page in the publication layout. The JSON files may define machine-readable page plans that may be read by a compatible publisher system 120, or an intermediary interpreter/reader, and subsequently printed. The layout may be generated fully automatically without user interaction or semi-automatically with user interaction. The layout may be organized into sections, with each section comprising a plurality of pages. Each section may be based on a logical category or type and the content of the section may be based on shared subject-matter or topics of the content of the section. For example, when the publication may be a newspaper, the section may be based on a shared subject-matter or topic such as Arts, Sports, Business, Lifestyle, etc.

The partial layout includes a predetermined total number of pages, the section types, and section sizes (i.e., number of pages), which are predetermined and fixed, and cannot be changed during the layout process. The partial layout includes page furniture, which is pre-determined and fixed and cannot be changed during the layout process. Alternatively, the total number of pages of the publication or the number of pages in each section may be dynamically determined. The size of the header 310 and content area 320 of each page are also predetermined and fixed. The content of the headers of each page are pre-determined. The size of each page of the publication is also fixed and the same for each page. The partial layout typically comprises a combination of a pre-allocated space and free space. Both the pre-allocated and the free space of each page is defined by a set of one or more rectangles, which can be allocated to rectangle containers defined in the canvas of a page in the publication, thereby enabling fitting/packing.

A given page may comprise pre-allocated space comprising pre-allocated content, free space (the "canvas") or a combination thereof. The pre-allocated content may comprise one or more pre-allocated content items and/or one or more pre-allocated ads. The pre-allocated content items may include any combination of content items such as articles (e.g., newspaper articles, scholarly articles, or the like), editorials, obituaries, recipes, posts, classifieds, image galleries, indices, teasers, cartoons, and financial analysis/reports. As noted above, the pre-allocated space may be used to allocate two-page content items such as folios and jumps.

At step 404, pages are processed to organize each page into reserved (e.g., pre-allocated) space (for ads, content, or page furniture, etc.) and empty canvas surrounding the reserved space. Each page with free space is processed to generate one or more canvas layouts. It will be appreciated that each page with free space may have several valid canvas layouts, and each canvas layout having a different layout of article containers therein.

At step 406, a plurality of possible configurations for each content item received from the publisher with the partial layout is determined by one or more content item configuration ("shape") generator functions/algorithms using formatting rules based on one or more of its respective content type, feature eligibility, logical category and/or section associated with its logical category. In some embodiments, a distinct and separate content item configuration ("shape") generator function/algorithm is used for each content item configuration shape or type (e.g., one large image, multiple images, etc.). As noted above, this may be performed in advance of layout processing or in real-time during layout processing.

At step 407, the configurations of each content item are evaluated using presentation rules for publications, such as newspapers, and 2D packing efficiency. The presentation rules may be set by the publisher and may therefore vary between publishers and depend on the respective publication system 120. The presentation rules may comprise one or both of (i) hard presentation rules which require or prohibit a type of placement, and (ii) soft presentation rules that affect a fit score for the content item.

Each presentation rule may apply to the overall content item, elements of the content item, or both, depending on the presentation rule. The presentation rules may vary based on the content type of the content item (e.g., article vs. other type of content item such as editorials, tabular sports results, weather forecast, obituaries, recipes, posts, classifieds, image galleries, indices, teasers, cartoons, financial analysis/reports, etc.). The presentation rules can be variably based on content priority, content type, section and or other logical segmentation.

Examples of hard presentation rules include universal formatting rules. Examples of universal formatting rules include, but are not limited to: no breaking text (i.e., do not to locate an image in an article such that the flow of text is never broken), a full width image must be located above a headline, fact boxes must not touch a preamble, a primary image must be bigger than a secondary image, preambles must be being located at the beginning of a content item, and bylines must be located at the end of a content item. More and/or different universal formatting rules may be used.

Examples of soft presentation rules for the fit score include but are not limited to:
(i) a preference for large or small images;
(ii) a number of content elements of each content item that is used;
(iii) a priority, priority type or priority rating of the content item;
(iv) a height:width ratio of the content item; and
(v) a typographic line count of the content element or content item (e.g., headlines with smaller typographic line counts may be preferred, for example 2 lines may be preferred to 3 lines).

The 2D packing efficiency measures the current 2D fit relative to the best 2D fit in spatial terms. The 2D packing efficiency may be measured using one or a combination of known equations or algorithms.

An invalid configuration is a configuration for a content item that violates any one or more of the hard presentation rules. In some embodiments, step 407 comprises a first sub-step of determining any invalid configurations for the content items by determining any configurations for a content item that violate any one or more of the hard presentation rules, and removing any invalid configurations from further processing. In a second sub-step, a first fit score (the "shape fit score" or "container fit score") is determined for all valid configurations for each content item using a first scoring algorithm/rules that represents (i) a 2D packing efficiency of the content item configuration (also known as the "shape" or "container"), and (ii) compliance with a first set of presentation rules for publications. The first set of presentation rules typically consists only of soft presentation rules. In some embodiments, the first fit score is a finite score or value between 0 and 1, wherein 0 represents the worst fit and 1 represents the best fit. The first scoring algorithm/rules assigns a subscore to each soft presentation rules, either a "reward" (positive subscore) or "penalty" (negative subscore) by comparing the configuration of the content item to the presentation rules and summing the subscores.

At step 408, a processing order to process the pages is determined based on page complexity. This may involve sorting the pages based on page complexity. Pages having a special presentation area (e.g., spreads) are more complex and are processed first. After pages having a special presentation have been processed, pages are processed in descending order of the amount of reserved space (with pages having more reserved space being processed first).

At step 409, a section of the multi-page printed publication is selected for processing. In at least some embodiments, the section is selected based on a determined processing order based on page complexity. In other embodiments, the section may be selected based on the order of the sections in the multi-page printed publication.

At step 410, a page of the multi-page printed publication (e.g., newspaper) is selected from a plurality of pages by the layout system 110 in accordance with the determined processing order based on page complexity.

At step 412, one or more content items for each container in the currently selected canvas for the currently selected page are selected from the plurality of content items in the content database 130 based on factors described below.

The content items are selected from the plurality of content items in the content database 130 based on priority/priority type and content type. The content type is based on content type of the article and the content type of the container/canvas/page/section being processed. The content items are typically selected by referencing the content database 130 and the data and information contained therein but without retrieving the content item itself. Content items are selected in a descending order of priority from high to low such that content items having a higher priority are selected before content items having a lower priority. In some embodiments, the content items are selected from the plurality of content items in the content database 130 so that each page has one content item of a primary priority type (e.g., non-filler) and one or more content items of a secondary primary content type (e.g., filler). In such cases, the content items of each of primary priority type are selected from content items of the primary priority type in a descending order of priority from high to low and the content items of each of secondary priority type are selected from content items of the secondary priority type in a descending order of priority from high to low.

The "priority type" represents a subset of content items. The subset of content items may be selected based on a descending order of the priority type from a highest priority type to a lowest priority type, wherein a priority type having a higher rating are selected before priority types having a lower rating. The number and complexity of priority types may vary. In a simple example, the priority types consist of primary content items (e.g., non-filler) and secondary content items (e.g., filler), which may be determined based on a course rating of the content or source of the content items. In this example, the content items are selected in descending order of the priority type from primary to secondary. In more complex examples, the priority types may be based on a fine rating (e.g., graduated) of the content or source of the content items with a plurality of rating threshold. The ratings may be determined by an automated evaluation algorithm which determines a predicted (or estimated) performance indicator or enterprise value. The performance indicator may comprise a numerical value, as noted above. For convenience, the following description will be based on the simple example in which the priority types consist of primary content items (e.g., non-filler) and secondary content times (e.g., filler).

The priority rating may be based on a predicted (or estimated) performance indicator or enterprise value determined by an automated evaluation algorithm. The performance indicator may comprise a numerical value, as noted above. In the rare event that two content items have the same rating, a selection between content items with the same rating may be based on an order in which the content item appears in the content database 130 with earlier content items being selected before later content items, a date that content item was created with newer content items being selected before later content items, or other suitable means (alphabetical based on headline/title, higher rated/preferred authors having higher rated content items, etc.).

The content items may be selected from a subset of content items based on subject matter, which may be defined by metadata encoded in, or associated with, the content items. Examples of subject matter include, Arts, Sports, Education, Finance, Legal, Top Stories, etc. Thus, in the Arts section, content items are selected from content items related to Arts and the like. It will be appreciated that some content items may be associated with more than one subject matter area.

Next, for each possible canvas layout of the currently selected page, a number of page configurations are generated by populating the canvas with configurations of the selected content items. Each page configuration represents a particular canvas layout populated with the selected content items in particular configurations. In at least some embodiments, content items are assigned to containers in the canvas based on order of increasing container size, from the smallest container to the largest container.

At step 414, a canvas layout of the currently selected page is selected from the possible canvas layouts of the currently selected page.

At step 416, a content item configuration is selected for each of the selected content items from the valid configurations for the respective content item determined in step 407.

At step 418, a canvas configuration is generated by populating the currently selected canvas with the selected configurations of the selected content items. The canvas is populated with the selected content items in the selected configurations starting at a designated reference point (e.g., the top left) of the canvas (free space of the selected canvas). In some embodiments, the designated reference point is a top left of the free space of the selected canvas. In other embodiments, the designated reference point is a top right of the free space of the selected canvas (for example, when the language of the publication is Japanese or other top right oriented language). The configuration of the content item is defined by a set of one or more rectangles and the free space of the selected canvas is defined by a set of one or more to rectangle containers defined in the canvas of a page in the publication.

At step 419, post-processing is performed on the populated canvas. In at least some embodiments, the post-processing comprises adjusting the content and/or white space of the canvas so that the contents of the canvas fit within the canvas in accordance with predetermined presentation rules for white space. The adjustment of content may comprise stretching a content item or a part thereof to fill white space, compressing a content item or a part thereof, changing the size of text of a content item or a part thereof, or adding white space at predetermined locations within a content item. The presentation rules for white space may be set by the publisher and may define, for example, one or a combination of which content items or parts thereof may be adjusted, an amount by which a content item or a part thereof may be stretched, an amount by which a content item or a part thereof may be stretched, an amount by which the size of text of a content item or a part thereof may be increased or decreased, predetermined locations at which white space within a content item may be added, predetermined content types at or around which white space within a content item may be added (e.g., surrounding a quote), and an amount of white space within a content item may be added.

At step 420, a second fit score (the "canvas fit score") is determined for the canvas configuration using a second scoring algorithm/rules that represents (i) a 2D packing efficiency of the canvas configuration, (ii) compliance with a second set of presentation rules for publications, and optionally (iii) previously determined fit score(s), i.e. the first fit score. The second set of presentation rules is similar to the first set but is adapted for an individual canvas rather than a content item (or container). The second set of presentation rules may include adapted presentation rules of the previously applied set(s) of presentation rules (i.e., the first set of presentation rules), additional presentation rules, and/or some of the presentation rules of the previously applied set(s) of presentation rules may be omitted. The second set of presentation rules typically consists only of soft presentation rules. In some embodiments, the second fit score is a finite score or value between 0 and 1, wherein 0 represents the worst fit and 1 represents the best fit. The scoring algorithm/rules assigns a subscore to each soft presentation rules, either a "reward" (positive subscore) or "penalty" (negative subscore) by comparing the configuration of the content item to the presentation rules and summing the subscores.

Examples of additional presentation rules applied to the canvas layout include but are not limited to:
(i) a percentage (%) of a canvas comprised by the content item (e.g., tombstoning, in which a content item occupies the entire canvas, is associated with a large penalty);
(ii) a percentage (%) of a canvas comprised by images;
(iii) a number of similar content elements on the same canvas. if a number of possible content elements are available for a content item (e.g., a number of images for an article), a priority of the content elements may be defined. The placement of secondary elements (such as a second image, a second quote or second fact box for a particular content item) may be penalized based on the order of content elements in the content item (e.g., a preferred order may be headline, byline, deck, image, fact box, secondary image, quote, ... , factbox*, image*, wherein * represents the nth available element) with penalties based on variance from the preferred order;
(iv) a proximity to the top of the canvas; and
(v) an amount of remaining free space on the canvas.

At step 422, it is determined whether any canvas configurations have yet to be processed.

In response to a determination that one or more canvas configurations have yet to be processed, processing returns to step 416 at which a next canvas configuration is selected. In response to a determination that no more canvas configurations have yet to be processed, processing proceeds to step 424 it is determined whether any canvas layouts have yet to be processed.

In response to a determination that one or more canvas layouts have yet to be processed, processing returns to step 414 at which a next canvas layout is selected. In response to a determination that no more canvas layouts have yet to be processed, processing proceeds to step 428 at which the canvas configuration having the highest second fit score is selected for the currently selected page and the currently selected page is populated with the selected canvas configuration. It will be appreciated that step 420 in which the second fit score is determined may be performed in a different order than that shown provided it is performed before the comparison and selection step at 428.

At step 430, post-processing is performed on the populated page. The post-processing is similar to the post-processing at step 419 performed on the canvas. The post-processing at 430 may include adapted processing steps from 419 and/or additional processing steps, or some of the processing steps from 419 may be omitted. In at least some embodiments, the post-processing at 430 comprises adjusting the content and/or white space of the pages so that contents of the page fit each page in accordance with predetermined presentation rules for managing white space. The adjustment of content may comprise stretching a content item or a part thereof to fill white space, compressing a content item or a part thereof, changing the size of text of a content item or a part thereof, or adding white space at predetermined locations within a content item. The presentation rules for white space may be set by the publisher and may define, for example, one or a combination of which content items or parts thereof may be adjusted, an amount by which a content item or a part thereof may be stretched, an amount by which a content item or a part thereof may be stretched, an amount by which the size of text of a content item or a part thereof may be increased or decreased, predetermined locations at which white space within a content item may be added, predetermined content types at or around which white space within a content item may be added (e.g., surrounding a quote), and an amount of white space within a content item may be added. An updated publication layout for the multi-page publication document or file is also generated. The canvas layout (which includes container shapes and locations), the content items, and content item configurations of the selected page configuration are stored in the publication layout document or file.

At step 436, a third fit score (the "page fit score") is determined for the page using a third scoring algorithm/rules that represents (i) a 2D packing efficiency of the page, (ii) compliance with a third set of presentation rules for publications, and optionally (iii) one or more of the previously determined fit score(s), i.e. the first fit score and/or second fit score. The third set of presentation rules is similar to the first and second sets of presentation rules but is adapted for pages rather than an individual canvas or content item (or container). The third set of presentation rules may include adapted presentation rules of one or more of the previously applied sets of presentation rules (i.e., the first and/or second set of presentation rules), additional presentation rules, and/or some of the presentation rules of the previously applied sets of presentation rules may be omitted. The third set of presentation rules typically consists only of soft presentation rules. In some embodiments, the third fit score is a finite score or value between 0 and 1, wherein 0 represents the worst fit and 1 represents the best fit. The scoring algorithm/rules assigns a subscore to each soft presentation rules, either a "reward" (positive subscore) or "penalty" (negative subscore) by comparing the configuration of the content item to the presentation rules and summing the subscores.

At step 438, it is determined whether the third fit score equals or exceeds a threshold. If the third fit score does not equal or exceed the threshold, processing returns to step 410 at which the page is processed again with different selections to improve the fit score. The steps are repeated until the third fit score equals or exceeds the threshold. Alternatively, in other embodiments rather than determining whether the third fit score equals or exceeds a threshold, multiple variations of the page are generated, with each page configuration variation comprising a different canvas configuration, and the page configuration with the highest third fit score is selected similar to how the canvas configuration is selected in step 428.

If the third fit score equals or exceeds the threshold, processing continues to step 442 at which the selected content items used on the page are removed from the content database 130 and/or a set (or list) of content items in the content database 130 to be processed.

At step 444, it is determined whether there any pages yet to be processed. In response to a determination that one or more pages have yet to be processed, processing returns to step 410 at which the next page is selected in accordance with the determined processing order.

In response to a determination that no more pages have yet to be processed, processing continues at step 444 at which it is determined whether there any sections yet to be processed. In response to a determination that one or more sections have yet to be processed, processing returns to step 409 at which the next section is selected in accordance with the determined processing order. In response to a determination that no more sections have yet to be processed, the layout of the multi-page publication is determined to be full/complete and processing proceeds to step 450.

At step 450, a completed publication layout is output by the layout system 110. The completed publication layout is defined by the one or more JSON files, which have been updated as a result of the method 400. An encoded visualization of the multi-page publication may also be generated and output by the layout system 110. In at least some embodiments, the encoded visualization may be provided in Scalable Vector Graphics (SVG) or Portable Network Graphic (PNG) format. The encoded visualization provides a kind of map or legend of the multi-page publication for review by the publisher. The encoded visualization illustrates the content allocated to each page of the multi-page publication by content type, with each color representing a different content type or sub-type. The content sub-type may include the title, body, or content element/body part (e.g., article text, fact boxes, bylines, pull quotes, kicker/preamble, images, graphics, captions, or other). The encoded visualization may be provided for debugging or other purposes.

The completed publication layout is sent to the publisher system 120 for publication along with the encoded visualization, the publisher system 120 publishing the multi-page publication. As noted above, the publishing system 120 comprises or is coupled to a printer 150 and publishing the multi-page publication comprises printing the multi-page publication via the printer 150. Prior to printing, the JSON files are converted to machine-readable print instructions by the publisher system 120, depending on the printer 150. For example, the JSON file may be converted to an Adobe InDesign document via transcoding or the like, from which a print-ready document may be generated, such as a print-ready Portable Document Format (PDF) document.

In other embodiments, when the publication is organized into sections, the processing order may process sections in parallel rather than in a sequence.

In yet other embodiments, when the publication is not organized into sections, the steps relating to sections (such as steps 409 and 446) are omitted and the remaining steps in the method are adapted as necessary.

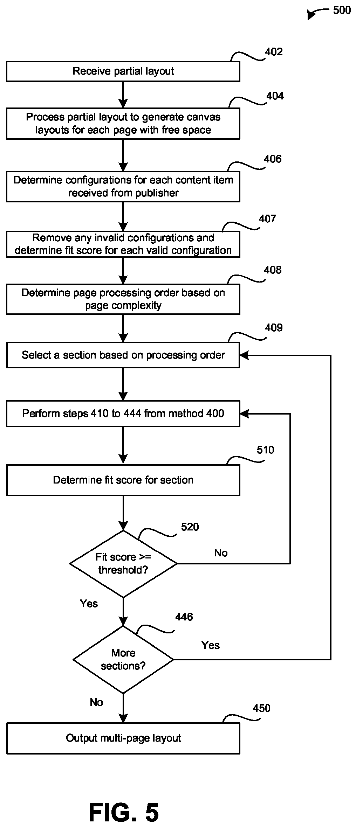

Referring next to FIG. 5, an automated method 500 of generating a publication layout of a multi-page publication in accordance with a second example embodiment of the present disclosure will be described. The method 500 is performed automatically by one or more processors of a layout system 110 without user intervention. The layout system 110 and method 500 apply custom algorithms that, when generating the layout of a multi-page printed publication, determine an optimal content placement for each page of a multi-page publication in accordance with layout parameters and a set of rules. In particular, the method determines an optimal placement of content items (e.g., articles) on each page of the multi-page printed publication. The method 500 is similar to the method 400 but applies additional optimizations at the section level.

In the method 500, steps 402-440 are performed as described above in connection with the method 400 of FIG. 4. In response to a determination that no more pages have yet to be processed in decision block 444, processing proceeds to step 510 at which a fourth fit score (the "section fit score") is determined for the section using a fourth scoring algorithm/rules that represents (i) a 2D packing efficiency of the pages in the section, (ii) compliance with a fourth set of presentation rules for publications, and optionally (iii) one or more of the previously determined fit scores, i.e. one or more of the first fit score, the second fit score, and third fit score. The fourth set of presentation rules is similar to the first, second and third sets of presentation rules but is adapted for sections rather than individual canvas, content items or containers, or pages. The fourth set of presentation rules may include adapted presentation rules of the previously applied sets of presentation rules (i.e., first, second and third sets of presentation rules), additional presentation rules, and/or some of the presentation rules of the previously applied sets of presentation rules may be omitted. The fourth set of presentation rules typically consists of soft presentation rules. In some embodiments, the fourth fit score is a finite score or value between 0 and 1, wherein 0 represents the worst fit and 1 represents the best fit. The scoring algorithm/rules assigns a subscore to each soft presentation rules, either a "reward" (positive subscore) or "penalty" (negative subscore) by comparing the configuration of the content item to the presentation rules and summing the subscores.

At step 520, it is determined whether the fourth fit score equals or exceeds a threshold. If the fourth fit score does not equal or exceed the threshold, processing returns to step 409 at which the section is processed again with different selections to improve the fit score. The steps are repeated until the fourth fit score equals or exceeds the threshold.

If the fourth fit score equals or exceeds the threshold, processing continues to step 446 at which it is determined whether there any sections yet to be processed. In response to a determination that one or more sections have yet to be processed, processing returns to step 409 at which the next section is selected in accordance with the determined processing order. In response to a determination that no more sections have yet to be processed, the layout of the multi-page publication is determined to be full/complete and processing proceeds to step 450 as described above.

Alternatively, in other embodiments rather than determining whether the fourth fit score equals or exceeds a threshold, multiple variations of the section are generated, each section configuration variant comprising a different set of page configurations, and the section configuration with the highest fourth fit score is selected similar to how the canvas configuration is selected in step 428.

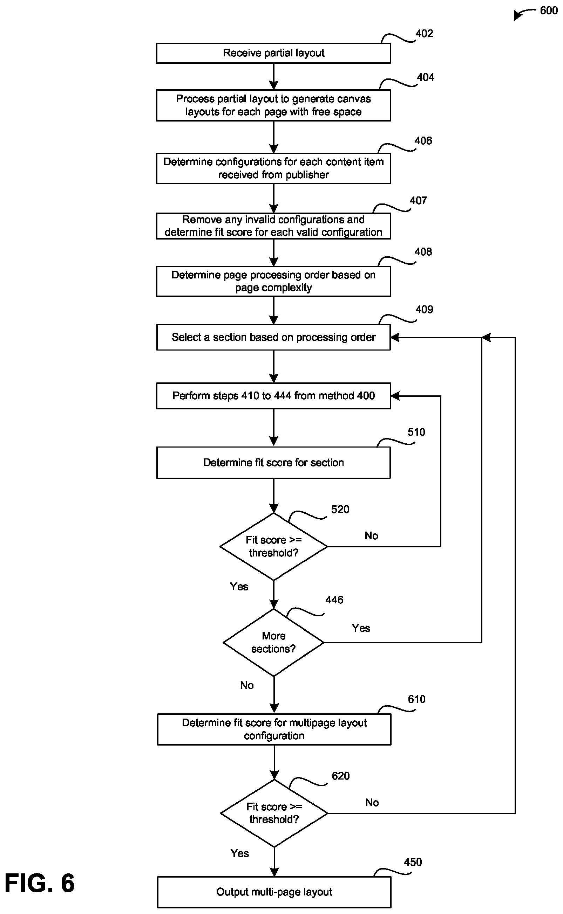

Referring next to FIG. 6, an automated method 600 of generating a publication layout of a multi-page publication in accordance with a third example embodiment of the present disclosure will be described. The method 600 is performed automatically by one or more processors of a layout system 110 without user intervention. The layout system 110 and method 600 apply custom algorithms that, when generating the layout of a multi-page printed publication, determine an optimal content placement for each page of a multi-page publication in accordance with layout parameters and a set of rules. In particular, the method determines an optimal placement of content items (e.g., articles) on each page of the multi-page printed publication. The method 600 is similar to the method 500 but applies additional optimizations at the overall layout/publication level.

In the method 600, steps 402-446 are performed as described above in connection with the method 500 of FIG. 5. In response to a determination that no more sections have yet to be processed in decision block 446, processing proceeds to step 610 at which a fifth fit score (the "overall layout fit score" or "overall publication fit score") is determined for the entire layout/publication using a fifth scoring algorithm/rules that represents (i) a 2D packing efficiency of the sections in the entire layout/publication, (ii) compliance with a fifth set of presentation rules for publications, and optionally (iii) one or more of the previously determined fit scores, i.e. one or more of the first fit score, the second fit score, third fit score, and fourth fit score. The fifth set of presentation rules is similar to the first, second, third and fourth sets of presentation rules but is adapted for sections rather than individual canvas, content items or containers, pages or sections. The fifth set of presentation rules may include adapted presentation rules of the previously applied sets of presentation rules (i.e., first, second, third and fourth sets of presentation rules), additional presentation rules, and/or some of the presentation rules of the previously applied sets of presentation rules may be omitted. The fifth set of presentation rules typically consists of soft presentation rules. In some embodiments, the fifth fit score is a finite score or value between 0 and 1, wherein 0 represents the worst fit and 1 represents the best fit. The scoring algorithm/rules assigns a subscore to each soft presentation rules, either a "reward" (positive subscore) or "penalty" (negative subscore) by comparing the configuration of the content item to the presentation rules and summing the subscores.

At step 620, it is determined whether the fifth fit score equals or exceeds a threshold. If it is determined that the fifth fit score does not equal or exceed the threshold, processing returns to step 409 at which the entire layout is processed again with different selections to improve the fit score. The steps are repeated until the fifth fit score equals or exceeds the threshold.

If the fifth fit score equals or exceeds the threshold, the layout of the multi-page publication is determined to be full/complete and processing proceeds to step 450 as described above.

Alternatively, in other embodiments rather than determining whether the fifth fit score equals or exceeds a threshold, multiple variations of the entire layout/publication are generated, each entire layout/publication configuration variant comprising a different set of section and page configurations, and the entire layout/publication configuration with the highest fifth fit score is selected similar to how the canvas configuration is selected in step 428.

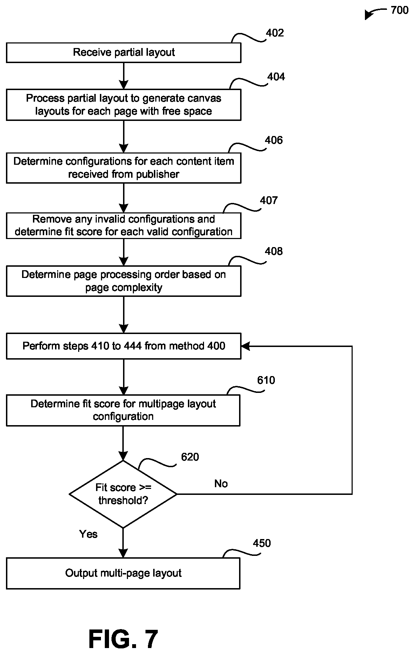

Referring next to FIG. 7, an automated method 700 of generating a publication layout of a multi-page publication in accordance with a fourth example embodiment of the present disclosure will be described. The method 700 is performed automatically by one or more processors of a layout system 110 without user intervention. The layout system 110 and method 700 apply custom algorithms that, when generating the layout of a multi-page printed publication, determine an optimal content placement for each page of a multi-page publication in accordance with layout parameters and a set of rules. In particular, the method determines an optimal placement of content items (e.g., articles) on each page of the multi-page printed publication. The method 700 is similar to the method 600 but the publication does not have sections and/or section optimizations from the method 600 are omitted.

Although the foregoing description makes reference to JSON, Extensible Markup Language (XML) may be used instead of JSON in other embodiments.

Although the foregoing description relates to examples of printed publications, the method of the present application may be used to allocate content to online or digital content having multiple pages or screens of fixed size, such as a digital newsletter, digital newspaper, digital magazine, or similar multi-page or multi-screen media.

The steps (also referred to as operations) in the flowcharts and drawings described herein are for purposes of example only. There may be many variations to these steps/operations without departing from the teachings of the present disclosure. For instance, the steps may be performed in a differing order, or steps may be added, deleted, or modified, as appropriate.

### General

Through the descriptions of the preceding embodiments, the present invention may be implemented by using hardware only, or by using software and a necessary universal hardware platform, or by a combination of hardware and software. The coding of software for carrying out the above-described methods described is within the scope of a person of ordinary skill in the art having regard to the present disclosure. Based on such understandings, the technical solution of the present invention may be embodied in the form of a software product. The software product may be stored in a non-volatile or non-transitory storage medium, which can be an optical storage medium, flash drive or hard disk. The software product includes a number of instructions that enable a computing device (personal computer, server, or network device) to execute the methods provided in the embodiments of the present disclosure.

All values and sub-ranges within disclosed ranges are also disclosed. Also, although the systems, devices and processes disclosed and shown herein may comprise a specific plurality of elements, the systems, devices and assemblies may be modified to comprise additional or fewer of such elements. Although several example embodiments are described herein, modifications, adaptations, and other implementations are possible. For example, substitutions, additions, or modifications may be made to the elements illustrated in the drawings, and the example methods described herein may be modified by substituting, reordering, or adding steps to the disclosed methods.

Features from one or more of the above-described embodiments may be selected to create alternate embodiments comprised of a subcombination of features which may not be explicitly described above. In addition, features from one or more of the above-described embodiments may be selected and combined to create alternate embodiments comprised of a combination of features which may not be explicitly described above. Features suitable for such combinations and subcombinations would be readily apparent to persons skilled in the art upon review of the present disclosure as a whole.

In addition, numerous specific details are set forth to provide a thorough understanding of the example embodiments described herein. It will, however, be understood by those of ordinary skill in the art that the example embodiments described herein may be practiced without these specific details. Furthermore, well-known methods, procedures, and elements have not been described in detail so as not to obscure the example embodiments described herein. The subject matter described herein and in the recited claims intends to cover and embrace all suitable changes in technology.

Although the present invention and its advantages have been described in detail, it should be understood that various changes, substitutions and alterations can be made herein without departing from the invention as defined by the appended claims.

The present invention may be embodied in other specific forms without departing from the subject matter of the claims. The described example embodiments are to be considered in all respects as being only illustrative and not restrictive. The present disclosure intends to cover and embrace all suitable changes in technology. The scope of the present disclosure is, therefore, described by the appended claims rather than by the foregoing description. The scope of the claims should not be limited by the embodiments set forth in the examples, but should be given the broadest interpretation consistent with the description as a whole.

## Claims

1. A computer-implemented method of generating a publication layout of a multi-page publication, the publication layout being defined by a publication layout computer-readable electronic document, each page of the publication comprising a content area, the method comprising the steps of:
(a) selecting a page having free space in the content area from a set of pages of the publication layout, the selecting based on a processing order;
(b) selecting one or more content items from a set of content items;
(c) selecting a canvas layout from a plurality of canvas layouts;
(d) selecting a configuration for each of the selected content items from a plurality of valid configurations for each of the selected content items;
(e) populating the selected canvas layout with the selected content items in the selected configurations for each of the selected content items to generate a populated canvas;
(f) determining a canvas fit score for the populated canvas, the canvas fit score being based on a measure of a two-dimensional (2D) packing efficiency of the populated canvas and a measure of an amount by which the populated canvas complies with a plurality of presentation rules;
(g) selecting a canvas configuration having the highest canvas fit score;
(h) populating the selected page with the selected canvas configuration to generate a populated page;
(i) determining a page fit score for the populated page, the page fit score being based on a measure of the 2D packing efficiency of the populated page and a measure of an amount by which the populated page complies with a plurality of presentation rules;
(j) in response to the page fit score meeting or exceeding a threshold, generating an updated publication layout computer-readable electronic document based on the populated page;
(k) repeating steps (a) to (j) for each page having free space in the set of pages of the publication layout until no pages having free space remain in the set of pages of the publication layout, and then outputting a completed publication layout computer-readable electronic document; and
printing, via a printer, the completed publication layout computer-readable electronic document; or
sending the completed publication layout computer-readable electronic document to a publisher system for printing via a printer, the sending causing the publisher system to print the completed publication layout computer-readable electronic document via the printer.

2. The method of claim 1, further comprising the step of:
before determining the canvas fit score in step (f), performing post-processing on the populated canvas, the post-processing comprising adjusting a content and/or white space of the canvas so that the contents of the canvas fit within the canvas in accordance with predetermined presentation rules for white space.

3. The method of claim 1 or claim 2, further comprising the step of:
before determining the page fit score in step (i), performing post-processing on the populated page, the post-processing comprising adjusting a content and/or white space of the page so that the contents of the page fit within a printable area of the page in accordance with predetermined presentation rules for white space.

4. The method of any one of claims 1 to 3, further comprising the step of:
before selecting a configuration for each of the selected content items in step (d), removing any invalid configurations for each content item in the set of content items, and determining a shape fit score for each invalid configurations for each content item in the set of content items.

5. The method of any one of claims 1 to 4, wherein each page in the publication layout having free space has a predetermined feature eligibility, wherein feature eligibility of a page indicates all feature types that are valid for the page, each feature type representing a special presentation format for a content item, the method further comprising the step of:
before selecting the canvas layout in step (c), generating the plurality of canvas layouts for each page in the publication layout having free space based on a set of presentation rules and the predetermined feature eligibility for each page in the publication layout.

6. The method of claim 5, wherein the feature types include: (i) folios ("double trucks" or "spreads") in which a content item is presented on two full facing (adjacent) pages of the publication; (ii) jumps ("turns") in which a content item is presented on pages of two or more non-adjacent pages of the publication or portions thereof, (iii) loft items in which a content item is located at a top of a content area of a page of the publication; (vi) cellar items in which a content time is located at the bottom of the content area of a page; (v) briefs/stick content items in which a content item is limited to one column of a page of the publication; and (vii) galleries in which the content item is a collection of images.

7. The method of any one of claims 1 to 6, wherein each page in the publication layout having free space has a predetermined feature eligibility, wherein feature eligibility of a page indicates all feature types that are valid for the page, each feature type representing a special presentation format for a content item, the method further comprising the step of:
determining the processing order for the pages based on a complexity of
each page, wherein the complexity of each page is based on the predetermined feature eligibility of the page.

8. The method of any one of claims 5 to 7, wherein each content item in the set of content items has a predetermined feature eligibility, wherein feature eligibility of a content item indicates all feature types that are valid for the content item, each feature type representing a special presentation format for the content item.

9. The method of any one of claims 1 to 8, further comprising the step of:
in response to the page fit score meeting or exceeding a threshold, removing the selected content items in the populated page from the set of content items.

10. The method of any one of claims 1 to 9, wherein in step (b) the one or more content items are selected in descending order of priority such that content items having a higher priority are selected before content items having a lower priority.

11. The method of any one of claims 1 to 10, wherein the content items are selected based on one or both of a priority and/or content type.

12. The method of any one of claims 1 to 11, wherein the content items are selected based on priority and content, wherein the pages of the multi-page publication are organized into a plurality of sections, wherein each content item and each section of the multi-page publication is associated with one or more logical categories, and wherein selecting the content items based on content comprises selecting content items based on the logical categories associated with the content items and the logical sections of the selected page.

13. The method of any one of claims 1 to 12, wherein the set of pages of the publication layout is a section of the multi-page publication, the method further comprising the steps of:
before selecting the page in the publication layout having free space in step (a):
selecting the section of the multi-page publication based on a processing order; and
after step (k):
(l) determining a section fit score for the section, the section fit score being based on a measure of the 2D packing efficiency of the populated section and a measure of an amount by which the populated section complies with a plurality of presentation rules; and
(m) in response to the section fit score meeting or exceeding a threshold, generating an updated publication layout computer-readable electronic document based on the populated section; and
(n) repeating steps (a) to (m) for each section in the publication layout having free space until no sections in the publication layout having free space remain, and then outputting the completed publication layout computer-readable electronic document.

14. The method of any one of claims 1 to 12, wherein the set of pages of the publication layout is all of the pages of the multi-page publication, the method further comprising the steps of:
after step (k):
(l) determining an overall layout fit score for the multi-page publication, the section fit score being based on a measure of the 2D packing efficiency of the populated multi-page publication and a measure of an amount by which the populated multi-page publication complies with a plurality of presentation rules; and
(m) in response to the overall layout fit score meeting or exceeding a threshold, generating an updated publication layout computer-readable electronic document based on the populated overall layout; and
(n) in response to the overall layout fit score not meeting or exceeding the threshold, repeating steps (a) to (m) with different selections until the overall layout fit score is determined to meet or exceed the threshold.

15. The method of any one of claims 1 to 14, wherein:
the content area of each page of the publication consists of one or both of reserved space and non-reserved space, any free space in a page being located in the non-reserved space, the reserved space being allocated to advertisements; and/or
the non-reserved space of each page defines the canvas area; and/or
the canvas area of a page may be continuous or non-continuous; and/or
non-continuous canvas areas may be contiguous (i.e., touching or adjacent) or non-contiguous (i.e., non-touching or adjacent); and/or
each content item comprises a title ("headline") and a body, each body comprises one or more content elements, each content element being one of text, image or graphic; and/or
each content element is any one of a text portion, a fact box, a byline, a pull quote (an enlarged quote "pulled" from the body of the content item), a kicker (a graphic located above or below a headline), a preamble/deck, an image, a graphic or a caption; and/or
each content item in the set of content items having a content type, the content type being one of article(s), editorial(s), tabular sports result(s), weather forecast(s), obituary(ies), recipe(s), post(s), classified advertisement(s), image gallery(ies), index(ices), teaser(s), cartoon(s), and financial analysis(es)/report(s); and/or
the publication is a newspaper; and/or
the content area of each page of the publication is defined by a plurality of columns; and/or
the completed publication layout computer-readable electronic document comprises one or more JavaScript Object Notation (JSON) files; and/or
the method further comprises the step of generating an encoded visualization of the multi-page publication in accordance with the completed publication layout computer-readable electronic document, wherein the encoded visualization is in Scalable Vector Graphics (SVG) or Portable Network Graphic (PNG) format, wherein the encoded visualization illustrates the content allocated to each page of the multi-page publication by content type, with each color representing a different content type or sub-type.
